# EUROPÄISCHE PATENTSCHRIFT

(11) **EP 2 210 047 B1**
(45) Veröffentlichungstag und Bekanntmachung des Hinweises auf die Patenterteilung: **11.12.2013**
(21) Anmeldenummer: 08848330.0
(22) Anmeldetag: 20.10.2008
(51) Int. Cl.: F24C 15/10, B23K 26/20, B23K 26/32, C03C 27/02, C03C 27/04, B23K 26/40

(54) **VORRICHTUNG MIT EINER PLATTE UND EINEM MONTAGEELEMENT**
DEVICE HAVING A PLATE AND A MOUNTING ELEMENT
DISPOSITIF COMPORTANT UN PANNEAU ET UN ÉLÉMENT DE MONTAGE

(30) Priorität: 09.11.2007 ES 200703062
(43) Veröffentlichungstag der Anmeldung: 28.07.2010
(73) Patentinhaber: BSH Bosch und Siemens Hausgeräte GmbH, 81739 München (DE)
(72) Erfinder: BUÑUEL MAGDALENA, Miguel Angel, E-50017 Zaragoza (ES); CEAMANOS GAYA, Jesús, E-50015 Zaragoza (ES); DELGADO ALGUACIL, José David, E-50.018 Zaragoza (ES); GARCIA JIMÉNEZ, Jose Ramon, E-50009 Zaragoza (ES); LÓPEZ GASCÓN, Clara Isabel, E-50007 Zaragoza (ES); PEÑA TORRE, José Ignacio, E-50004 Zaragoza (ES); SCHMALENSTROT, Rene, E-50010 Zaragoza (ES); SOLA MARTINEZ, Daniel, E-50015 Zaragoza (ES); LIZARANZU FERNANDEZ, Miguel, E-50018 Zaragoza (ES)
(86) Internationale Anmeldenummer: PCT/EP2008/064138
(87) Internationale Veröffentlichungsnummer: WO 2009/059884

(56) Entgegenhaltungen:
- EP-A- 1 947 390
- FR-A- 2 744 201
- US-A- 5 990 457

## Beschreibung

Die Erfindung betrifft eine Vorrichtung mit einer Platte und einem Montageelement nach dem Oberbegriff des Anspruchs 1 und ein Verfahren zum Herstellen einer solchen Vorrichtung nach dem Oberbegriff des Anspruchs 6.

Aus dem Stand der Technik ist es bekannt, Kochfelder mit einer als Abdeckplatte ausgelegten Platte aus Glas oder Glaskeramik herzustellen, die unter der Platte angeordnete Heizelemente zum Beheizen von auf der Platte aufgestellten Kochgeschirrelementen umfassen. Die Heizelemente und Elektronikbaugruppen zum Betreiben dieser Heizelemente sind dabei in einem Gehäuse aufgenommen, das über ein stoffschlüssig mit der Platte verbundenes Montageelement mit der Platte derart verbunden wird, dass die Platte das Gehäuse an seiner in der Einbaulage horizontalen Oberseite verschließt. Solche Montageelemente sind insbesondere Metallprofile, die von der Unterseite gegen die Platte geklebt werden oder die einen seitlichen Rand der Platte zumindest teilweise umgreifen.

Die Montageelemente können auch aus Kunststoff sein, wie beispielsweise in der US 5 990 457 A und der FR 2 744 201 A gezeigt.

Das Herstellen einer Klebeverbindung zwischen dem Montageelement und der Platte ist jedoch nicht nur extrem kostenintensiv, da die Klebeverbindungen großen mechanischen und thermischen Beanspruchungen unterliegen, sondern derartige Klebeverbindungen sind häufig auch von einer vergleichsweise geringen Lebensdauer.

Der Erfindung liegt daher insbesondere die Aufgabe zugrunde, eine gattungsgemäße Vorrichtung mit einer besonders robusten Verbindung zwischen dem Montageelement und der Platte bereitzustellen.

Die Erfindung geht aus von einer Vorrichtung, insbesondere einem Kochfeld, mit einer Platte aus Glas oder Glaskeramik mit wenigstens einem stoffschlüssig mit der Platte verbundenen Montageelement zur Befestigung eines Gehäuses, wobei das Gehäuse insbesondere zur Aufnahme von Heizelementen und/oder Elektronikbauteilen der Vorrichtung ausgelegt sein kann.

Es wird vorgeschlagen, dass die Verbindung zwischen dem Montageelement und der Platte zumindest teilweise eine Schmelzverbindung ist. Als Schmelzverbindung soll in diesem Zusammenhang jede Verbindung bezeichnet werden, die durch Schmelzen oder Anschmelzen eines Materials beim Zusammenkleben der zu verbindenden Bauteile hergestellt werden kann. Insbesondere soll in diesem Zusammenhang auch eine Schweißnaht als eine Schmelzverbindung bezeichnet werden. Durch das Bereitstellen einer Schmelzverbindung wird eine robuste und haltbare Verbindung gewonnen, in welcher Materialien der beteiligten Bauteile ineinander oder umeinander fließen können.

Neben der Anwendung der Erfindung im Zusammenhang mit einer Abdeckplatte eines Kochfelds ist auch die Anwendung auf eine Backofentür oder Mikrowellenofentür, Kühlschranktür oder ähnliches denkbar.

Nach einer besonders kostengünstigen und konstruktiv einfachen Ausgestaltung der Erfindung wird vorgeschlagen, dass das Montageelement als Metallprofil ausgebildet ist.

Wenn die Verbindung zwischen dem Montageelement und der Platte eine mit dem Montageelement und der Platte verschmolzene Kunststoff- oder Kunstharzschicht umfasst, kann durch die Wahl eines vergleichsweise temperaturresistenten Kunststoffs oder Kunstharzes eine im Vergleich zu Klebeverbindungen besonders temperaturbeständige Verbindung geschaffen werden.

Nach einer weiteren Ausgestaltung der Erfindung wird vorgeschlagen, dass eine Fläche der Platte eine Ausnehmung aufweist, in welche das Montageelement eingreift. Dadurch kann die Schmelzverbindung durch einen Formschluss unter-stützt werden.

Ferner betrifft die Erfindung ein Verfahren zum Herstellen einer Vorrichtung mit einer Platte aus Glas oder Glaskeramik, wobei ein Montageelement zur Befestigung eines Gehäuses stoffschlüssig mit der Platte verbunden wird.

Es wird vorgeschlagen, dass in einem Schmelzverbindungsschritt die Verbindung zwischen dem Montageelement und der Platte zumindest teilweise durch ein Verschmelzen zweier Materialien hergestellt wird.

Nach einer Weiterbildung des erfindungsgemäßen Verfahrens wird vorgeschlagen, dass in dem Schmelzverbindungsschritt die Platte oder das Montageelement mit einem Laserstrahl erhitzt wird. Eine Beeinträchtigung der Materialeigenschaften der Platte und/oder des Montageelements in einer weiteren Umgebung der Verbindung kann ausgeschlossen werden, wenn in dem Schmelzverbindungsschritt das Material der Platte und/oder das Montageelement lokal geschmolzen werden. Die Schmelzverbindung kann unmittelbar durch das Schmelzen der Materialien der Platte und/oder des Montageelements erreicht werden, ohne dass das Hinzufügen eines Schmelzverbindungsmaterials notwendig ist.

Wenn in dem Schmelzverbindungsschritt ein zwischen der Platte und dem Montageelement eingebrachtes Schmelzverbindungsmaterial geschmolzen wird, kann eine Beeinträchtigung der Materialeigenschaften der Platte und/oder des Montageelements ausgeschlossen werden.

Wenn die Platte von einer ersten Seite erhitzt wird, um das auf einer zweiten, der ersten Seite gegenüber liegenden Seite eingebrachte Schmelzverbindungsmaterial zu schmelzen, kann die Schmelzverbindung auch in einem beispielsweise für einen Kleberoboter unzugänglichen Bereich hergestellt werden.

Ferner wird vorgeschlagen, dass in dem Schmelzverbindungsschritt das Montageelement mit der Platte in Kontakt gebracht wird und das Material der Platte unmittelbar neben einem Rand des Montageelements mittels eines Laserstrahls geschmolzen wird. Dadurch kann eine Verbindung von der Art einer Schweißnaht durch Schmelzen des Glas- oder Glaskeramikmaterials der Platte einfach geschaffen werden.

Wenn das Material der Platte für zumindest eine Wellenlänge eines Laserstrahls transparent ist, kann in dem Schmelzverbindungsschritt ein Laserstrahl durch das Material der Platte hindurch auf das bezüglich des Laserstrahls hinter der Platte angeordnete Montageelement fokussiert werden, so dass in einer einfachen und eleganten Weise eine robuste Verbindung herstellbar ist.

Weitere Vorteile ergeben sich aus der folgenden Zeichnungsbeschreibung. In der Zeichnung sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Vorrichtung mit einer Platte, einem Montageelement und einem Gehäuse in einer schematischen Darstellung,
- Fig. 2: einen Ausschnitt einer Platte und eines Montageelements während einer Laserbearbeitung zum Herstellen einer Schmelzverbindung,
- Fig. 3: ein alternatives Ausführungsbeispiel der Erfindung, in welchem eine Schmelzverbindung durch Schmelzen eines Glasmaterials der Platte hergestellt wird,
- Fig. 4: eine weitere alternative Ausgestaltung der Erfindung, in welcher ein Schmelzverbindungsmaterial zwischen die Platte und das Montageelement eingebracht ist,
- Fig. 5: eine weitere alternative Ausgestaltung der Erfindung, in welcher ein Schmelzverbindungsmaterial auf eine Oberseite der Platte aufgebracht ist und
- Fig. 6: eine weitere alternative Ausgestaltung der Erfindung, in welcher die Platte eine Ausnehmung aufweist.

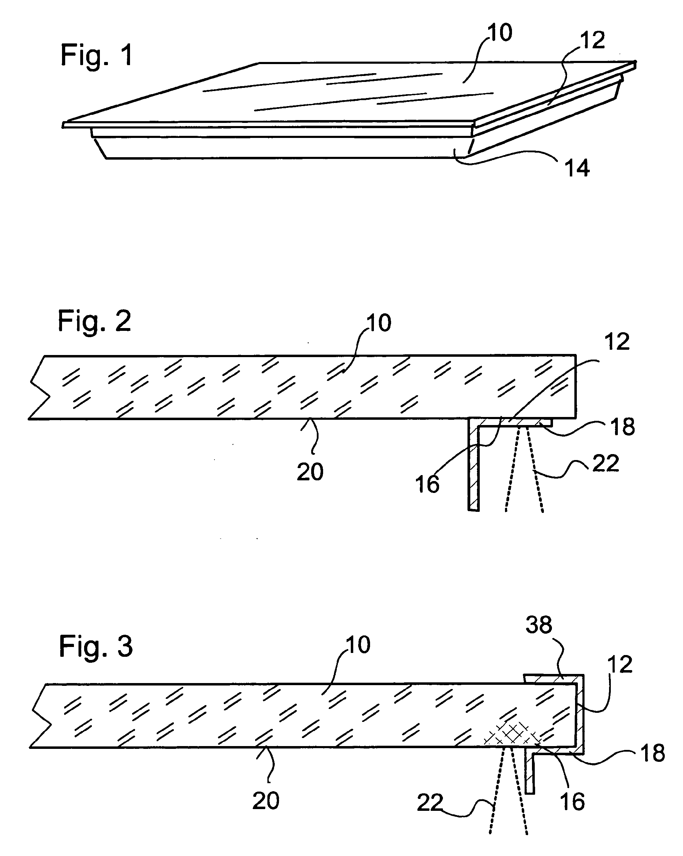

Figur 1 zeigt eine als ein Kochfeld ausgestaltete Vorrichtung mit einer als Abdeckplatte ausgestalteten Platte 10 aus Glas oder Glaskeramik, insbesondere aus vorgespanntem Glas, Korderit oder glasfaserverstärkte Keramikmaterialien, wie Kevlar-verstärktem Siliziumglas. Materialien, die für erfindungsgemäße Kochfelder oder Verfahren geeignet sind, zeichnen sich insbesondere durch hohe thermische Schockbeständigkeit aus, so dass das Glas oder Glaskeramikmaterial nicht springt, wenn es kurzfristig lokal erhitzt wird.

Das Kochfeld umfasst neben der Platte 10 einen als Metallrahmen aus Profilelementen ausgebildetes Montageelement 12, das stoffschlüssig mit der Platte 10 verbunden ist. Mit dem Montageelement 12 verschraubt ist ein schalenförmiges Gehäuse 14 zur Aufnahme von hier nicht explizit dargestellten Heizelementen und Elektronikbaugruppen zum Betreiben dieser Heizelemente. Im montierten Zustand schließt die Platte 10 das Gehäuse 14 nach oben ab.

Erfindungsgemäß ist die Verbindung zwischen dem Montageelement 12 und der Platte 10 zumindest teilweise d.h. zumindest lokal als Schmelzverbindung 16 ausgebildet.

Figur 2 illustriert einen Schmelzverbindungsschritt in einem Verfahren zum Herstellen eines Kochfelds der in Fig. 1 dargestellten Art. In dem Schmelzverbindungsschritt wird die Verbindung zwischen dem Montageelement 12 und der Platte 10 zumindest teilweise durch ein Verschmelzen zweier Materialien hergestellt. Dazu wird das winkelförmige Metallprofil des Montageelements 12 so an der Platte 10 zur Anlage gebracht, dass ein in Figur 2 horizontaler Schenkel 18 des Metallprofils flach an der Unterseite 20 der Platte 10 anliegt.

Anschließend wird der an der Unterseite 20 der Platte 10 anliegende Schenkel 18 des Montageelements 12 punktuell mit einem Laserstrahl 22, beispielsweise einem CO₂-Laser oder einem Neodym-YAG-Laser (Nd:YAG) erhitzt, so dass sich das Metall und eine Oberfläche des Glasmaterials der Platte 10 in dem entsprechenden Bereich verflüssigt und sich diese Materialien in einem Verbindungsbereich teilweise vermischen. Um die dabei entstehende Schmelzverbindung 16 zu verbessern, kann der horizontale Schenkel 18 des Metallprofils bzw. Montageelements 12 in Bereichen, die von dem Laserstrahl 22 geschmolzen werden, kleine Löcher aufweisen, die eine Benetzung einer festen Materialkomponente durch eine verflüssigte Materialkomponente verbessern können und eine direkte Einwirkung des Laserstrahls 22 auf das Glasmaterial erlauben.

Die Platte 10 kann aus jedem Material mit hinreichender thermischer Schockresistenz und mechanischen Eigenschaften hergestellt werden, die ausreichend sind, um durch unterschiedliche thermische Expansionskoeffizienten zu dem Metall entstehende Spannungen aufzunehmen. Das Montageelement 12 kann aus beliebigen Metallen, beispielsweise Aluminium oder Stahlblech, hergestellt werden.

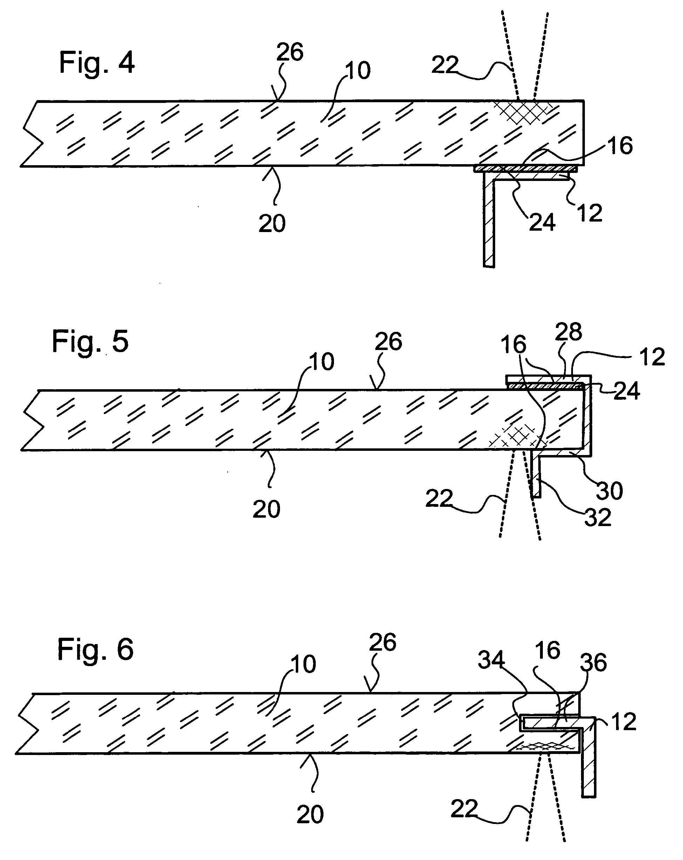

Um Unterschiede zwischen den thermischen Expansionskoeffizienten des Montageelements 12 und der Platte 10 besser ausgleichen zu können, wird in einem in Figur 4 dargestellten Ausführungsbeispiel ein Schmelzverbindungsmaterial 24, beispielsweise eine Kunststoff- oder Kunstharzbeschichtung, zwischen dem Montageelement 12 und der Platte 10 angeordnet.

Figur 3 zeigt ein alternatives Ausführungsbeispiel der Erfindung, in welchem eine Schmelzverbindung 16 durch Schmelzen eines Glasmaterials der Platte 10 hergestellt ist, und zwar durch Anschmelzen des Materials seitlich neben einen inneren Rand eines horizontalen Schenkels 18 des Montageelements 12, von dem eine Montagelasche 32 rechtwinklig abgekantet ist. Eine weiterer Schenkel 38 im Profil des Montageelements 12 liegt auf einer Oberseite 26 der Platte 10 auf und entlastet die durch das Erhitzen des Glasmaterials entstehende Schmelzverbindung 16.

In dem in Figur 4 dargestellten Ausführungsbeispiel wird die Platte 10 von einer Oberseite 26 aus erhitzt, um das auf der der Oberseite 26 gegenüberliegenden Unterseite 20 eingebrachte Schmelzverbindungsmaterial 24 zu schmelzen. Falls das Material der Platte 10 für die Wellenlänge des Laserstrahls 22 transparent ist, kann der Laserstrahl 22 alternativ das Material der Platte 10 durchdringen und auf einem Bereich fokussiert werden, in dem das Schmelzverbindungsmaterial 24 angeordnet ist, um das Schmelzverbindungsmaterial 24 zu schmelzen. Es kann entweder ausschließlich das Schmelzverbindungsmaterial 24 oder sowohl das Schmelzverbindungsmaterial 24 als auch ein weiteres Material der Platte 10 oder des Montageelements 12 geschmolzen werden, um die Schmelzverbindung 16 herzustellen.

Figur 5 zeigt ein weiteres alternatives Ausführungsbeispiel, in welchem das Metallprofil des Montageelements 12 einen Rand der Platte 10 umgreift. Das Montageelement 12 bildet ein im Wesentlichen U-förmiges Profil mit zwei parallelen, in Figur 5 und in der Montagekonfiguration horizontal verlaufenden Schenkeln 28, 30. Ein Schmelzverbindungsmaterial 24 aus Kunstharz oder Kunststoff wird auf einen Rand einer Oberseite 26 der Platte 10 aufgebracht, und das Montageelement 12 wird so auf den Rand der Platte 10 aufgesteckt, dass der längere der beiden horizontalen Schenkel 28 das auf die Platte 10 aufgebrachte Schmelzverbindungsmaterial 24 überdeckt, wobei das Schmelzverbindungsmaterial 24 zwischen dem längeren Schenkel 28 und der Oberseite 26 der Platte 10 angeordnet ist. Der kürzere der beiden horizontalen Schenkel 30, von welchem eine Montagelasche 32 senkrecht abgewinkelt ist, kommt dabei an einer Unterseite 20 der Platte 10 zur Anlage.

In dem Schmelzverbindungsschritt wird die Platte 10 von der Unterseite 20 aus derart erhitzt, dass das Schmelzverbindungsmaterial 24 schmilzt und dass so eine stoffschlüssige Schmelzverbindung 16 zwischen der längeren Seite und der Oberseite 26 der Platte 10 hergestellt wird.

Figur 6 zeigt ein weiteres alternatives Ausführungsbeispiel der Erfindung, in welchem die Platte 10 eine Ausnehmung 34 aufweist, in welche das Montageelement 12 eingreift. Die Ausnehmung 34 ist in einer Seitenfläche der Platte 10 eingearbeitet, beispielsweise in einem Laserbearbeitungsverfahren, hat in der Tiefe ein rechtwinkliges, U-förmiges Profil und längs der Kante der Platte 10, senkrecht zur Zeichenebene in Figur 6, eine Erstreckung von einigen Zentimetern.

Über den Umfang der Platte 10 sind eine Vielzahl von gleichartigen Ausnehmungen 34 in die seitliche Stirnfläche der Platte 10 eingearbeitet. Das Montageelement 12 umfasst entsprechend rechtwinklig abgekantete Laschen 36, die in die Ausnehmungen 34 eingeführt werden. Anschließend wird die Platte 10 im Bereich der Ausnehmungen 34 von unten durch einen Laserstrahl 22 derart erhitzt, dass das Glasmaterial der Platte 10 und/oder das Metallmaterial des Montageelements 12 schmilzt und dass eine Schmelzverbindung 16 zwischen der in Figur 6 unten liegenden Innenfläche der Ausnehmung 34 und dem Montageelement 12 entsteht.

### Bezugszeichen

- 10: Platte
- 12: Montageelement
- 14: Gehäuse
- 16: Schmelzverbindung
- 18: Schenkel
- 20: Unterseite
- 22: Laserstrahl
- 24: Schmelzverbindungsmaterial
- 26: Oberseite
- 28: Schenkel
- 30: Schenkel
- 32: Montagelasche
- 34: Ausnehmung
- 36: Lasche
- 38: Schenkel

## Patentansprüche

1. Vorrichtung mit einer Platte (10) aus Glas oder Glaskeramik mit wenigstens einem stoffschlüssig mit der Platte (10) verbundenen Montageelement (12) zur Befestigung eines Gehäuses (14), **dadurch gekennzeichnet, dass** die Verbindung zwischen dem Montageelement (12) und der Platte (10) zumindest teilweise eine Schmelzverbindung (16) ist.

2. Vorrichtung nach Anspruch 1, **dadurch gekennzeichnet, dass** das Montageelement (12) als Metallprofil ausgebildet ist.

3. Vorrichtung nach einem der vorhergehenden Ansprüche, **dadurch gekennzeichnet, dass** die Verbindung zwischen dem Montageelement (12) und der Platte (10) eine mit dem Montageelement (12) und der Platte (10) verschmolzene Kunststoff- oder Kunstharzschicht umfasst.

4. Vorrichtung nach einem der vorhergehenden Ansprüche, **dadurch gekennzeichnet, dass** wenigstens eine Fläche der Platte (10) eine Ausnehmung (34) aufweist, in welche das Montageelement (12) eingreift.

5. Vorrichtung nach einem der vorhergehenden Ansprüche, **dadurch gekennzeichnet, dass** die Platte (10) als Abdeckplatte eines Kochfelds ausgebildet ist und das Montageelement (12) zur Verbindung der Abdeckplatte mit einem Kochfeldgehäuse ausgelegt ist.

6. Verfahren zum Herstellen einer Vorrichtung mit einer Platte (10) aus Glas oder Glaskeramik, wobei ein Montageelement (12) zur Befestigung eines Gehäuses (14) stoffschlüssig mit der Platte (10) verbunden wird, **dadurch gekennzeichnet, dass** in einem Schmelzverbindungsschritt die Verbindung zwischen dem Montageelement (12) und der Platte (10) zumindest teilweise durch ein Verschmelzen zweier Materialien hergestellt wird.

7. Verfahren nach Anspruch 6, **dadurch gekennzeichnet, dass** in dem Schmelzverbindungsschritt die Platte (10) oder das Montageelement (12) mit einem Laserstrahl (22) erhitzt wird.

8. Verfahren nach Anspruch 7, **dadurch gekennzeichnet, dass** in dem Schmelzverbindungsschritt das Material der Platte (10) und/oder das Montageelement (12) lokal geschmolzen wird.

9. Verfahren nach einem der Ansprüche 6 - 8, **dadurch gekennzeichnet, dass** in dem Schmelzverbindungsschritt ein zwischen der Platte (10) und dem Montageelement (12) eingebrachtes Schmelzverbindungsmaterial (24) geschmolzen wird.

10. Verfahren nach Anspruch 9, **dadurch gekennzeichnet, dass** die Platte (10) von einer ersten Seite erhitzt wird, um das auf einer zweiten, der ersten Seite gegenüberliegenden Seite eingebrachte Schmelzverbindungsmaterial (24) zu schmelzen.

11. Verfahren nach einem der Ansprüche 6 - 10, **dadurch gekennzeichnet, dass** in dem Schmelzverbindungsschritt das Montageelement (12) mit der Platte (10) in Kontakt gebracht wird und das Material der Platte (10) unmittelbar neben einem Rand des Montageelements (12) mittels eines Laserstrahls (22) geschmolzen wird.

12. Verfahren nach einem der Ansprüche 6 - 11, **dadurch gekennzeichnet, dass** das Material der Platte (10) zumindest für eine Wellenlänge eines Laserstrahls (22) transparent ist und das in dem Schmelzverbindungsschritt ein Laserstrahl (22) durch das Material der Platte (10) hindurch auf das bezüglich des Laserstrahls (22) hinter der Platte (10) angeordnete Montageelement (12) fokussiert wird.

## Claims

1. Device with a plate (10) of glass or glass-ceramic with at least one mounting element (12), which is connected with the plate (10) by material couple, for fastening of a housing (14), **characterised in that** the connection between the mounting element (12) and the plate (10) is at least partly a fused connection (16).

2. Device according to claim 1, **characterised in that** the mounting element (12) is constructed as a metal section.

3. Device according to one of the preceding claims, **characterised in that** the connection between the mounting element (12) and the plate (10) comprises a synthetic material or synthetic resin layer fused to the mounting element (12) and the plate (10).

4. Device according to any one of the preceding claims, **characterised in that** at least one surface of the plate (10) has a recess (34) in which the mounting element (12) engages.

5. Device according to any one of the preceding claims, **characterised in that** the plate (10) is constructed as a top plate of a cooker hob and the mounting element (12) is designed for connection of the top plate with a cooker hob housing.

6. Method of producing a device with a plate (10) of glass or glass-ceramic, wherein a mounting element (12) for fastening of a housing (14) is connected with the plate (10) by material couple, **characterised in that** the connection between the mounting element (12) and the plate (10) is produced in a fused-connection step at least partly by fusing of two materials.

7. Method according to claim 6, **characterised in that** the plate (10) or the mounting element (12) is heated by a laser beam (22) in the fused-connection step.

8. Method according to claim 7, **characterised in that** the material of the plate (10) and/or the mounting element (12) is locally melted in the fused-connection step.

9. Method according to any one of claims 6 to 8, **characterised in that** a fused-connection material (24) introduced between the plate (10) and the mounting element (12) is melted in the fused-connection step.

10. Method according to claim 9, **characterised in that** the plate (10) is heated by a first step in order to melt the fused-connection material (24) introduced onto a second side opposite the first side.

11. Method according to any one of claims 6 to 10, **characterised in that** in the fused-connection step the mounting element (12) is brought into contact with the plate (10) and the material of the plate (10) is melted directly adjacent to an edge of the mounting element (12) by means of a laser beam (22).

12. Method according to any one of claims 6 to 11, **characterised in that** the material of the plate (10) is transparent at least for a wavelength of a laser beam (22) and that in the fused-connection step a laser beam (22) is focused through the material of the plate (10) onto the mounting element (12) arranged behind the plate (10) with respect to the laser beam (22).

## Revendications

1. Dispositif comprenant une plaque (10) en verre ou en vitrocéramique avec au moins un élément de montage (12) relié à la plaque (10) par adhésion de matière pour la fixation d'un châssis (14), **caractérisé en ce que** la liaison entre l'élément de montage (12) et la plaque (10) est, au moins en partie, une liaison par fusion (16).

2. Dispositif selon la revendication 1, **caractérisé en ce que** l'élément de montage (12) est exécuté en tant que profil métallique.

3. Dispositif selon l'une des revendications précédentes, **caractérisé en ce que** la liaison entre l'élément de montage (12) et la plaque (10) comprend une couche de matière plastique ou de résine synthétique fusionnée avec l'élément de montage (12) et la plaque (10).

4. Dispositif selon l'une des revendications précédentes, **caractérisé en ce qu'**au moins une surface de la plaque (10) comporte un évidement (34) dans lequel l'élément de montage (12) s'engage.

5. Dispositif selon l'une des revendications précédentes, **caractérisé en ce que** la plaque (10) est exécutée en tant que plaque de couverture d'une table de cuisson et l'élément de montage (12) est conçu pour relier la plaque de couverture à un châssis de table de cuisson.

6. Procédé de fabrication d'un dispositif comprenant une plaque (10) en verre ou en vitrocéramique, un élément de montage (12) pour la fixation d'un châssis (14) étant relié à la plaque (10) par adhésion de matière, **caractérisé en ce que**, dans une étape de liaison par fusion, la liaison entre l'élément de montage (12) et la plaque (10) est fabriquée, au moins en partie, par une fusion de deux matériaux.

7. Procédé selon la revendication 6, **caractérisé en ce que**, dans l'étape de liaison par fusion, la plaque (10) ou l'élément de montage (12) est chauffé/e par un rayon laser (22).

8. Procédé selon la revendication 7, **caractérisé en ce que**, dans l'étape de liaison par fusion, le matériau de la plaque (10) et/ou l'élément de montage (12) est fondu localement.

9. Procédé selon l'une des revendications 6-8, **caractérisé en ce que**, dans l'étape de liaison par fusion, un matériau de liaison par fusion (24) placé entre la plaque (10) et l'élément de montage (12) est fondu.

10. Procédé selon la revendication 9, **caractérisé en ce que** la plaque (10) est chauffée d'un premier côté pour faire fondre le matériau de liaison par fusion (24) placé sur un second côté, opposé au premier côté.

11. Procédé selon l'une des revendications 6-10, **caractérisé en ce que**, dans l'étape de liaison par fusion, l'élément de montage (12) est mis en contact avec la plaque (10) et le matériau de la plaque (10) est fondu directement près d'un bord de l'élément de montage (12) au moyen d'un rayon laser (22).

12. Procédé selon l'une des revendications 6-11, **caractérisé en ce que** le matériau de la plaque (10) est transparent au moins à une longueur d'onde d'un rayon laser (22) et **en ce que**, dans l'étape de liaison par fusion, un rayon laser (22) est concentré, à travers le matériau de la plaque (10), sur l'élément de montage (12) situé derrière la plaque (10) par rapport au rayon laser (22).
